**Europäisches Patentamt**

**European Patent Office**

**Office européen des brevets**

(19)

(11) Numéro de publication: **0 044 245 B1**

# FASCICULE DE BREVET EUROPEEN

(45) Date de publication du fascicule du brevet:
**15.02.84**

(21) Numéro de dépôt: **81401083.1**

(22) Date de dépôt: **06.07.81**

(51) Int. Cl.³: **B 25 J 19/00** // B66C1/40, G01B11/00

(54) Organe de préhension à capteurs optiques et appareil en faisant application.

(30) Priorité: **04.07.80 FR 8015009**

(43) Date de publication de la demande:
**20.01.82 Bulletin 82/3**

(45) Mention de la délivrance du brevet:
**15.02.84 Bulletin 84/7**

(84) Etats contractants désignés:
**CH DE FR GB IT LI NL**

(56) Documents cités:
**EP - A - 0 008 267**
**FR - A - 1 409 565**
**FR - A - 2 221 385**
**FR - A - 2 275 285**
**FR - A - 2 365 408**
**US - A - 3 952 880**

(73) Titulaire: **SOURIAU & Cie (S.A.), 9/13, rue du Général Galliéni, F-92103 Boulogne-Billancourt (FR)**
Titulaire: **SOCIETE D'ETUDES ET APPLICATIONS TECHNIQUES S E A T, 56, rue Elie-Sermet, F-11260 Esperaza (FR)**

(72) Inventeur: **Amberny, Philippe, F-18390 Savigny en Septaine (FR)**
Inventeur: **Ossona de Mendez, Michel, 168, Route des Templiers, F-91310 Montlhery (FR)**

(74) Mandataire: **Fort, Jacques, CABINET PLASSERAUD 84, rue d'Amsterdam, F-75009 Paris (FR)**

Organe de préhension à capteurs optiques et appareil en faisant application

La présente invention concerne les organes de préhension munis de capteurs optiques de détection d'objet; elle trouve des applications particulièrement importantes en robotique, en télécommande et pour la réalisation de prothèses motorisées, dites orthèses.

L'un des problèmes que pose la préhension par des organes mécaniques est constitué par la détection rapprochée des objets à saisir. Il faut obtenir une information presque équivalente à celle que procure le toucher et, en même temps, il faut éviter une dégradation des capteurs par l'environnement.

On a déjà proposé d'utiliser des capteurs de contact optiques, utilisant la réflexion ou la diffusion par les objets à déceler. Mais ces capteurs sont très sensibles aux salissures, ce qui les rend inutilisables dans les ambiances industrielles courantes. On connaît (US-A-3 952 880) un organe de préhension qui comprend un corps rigide, un élément de contact porté par le corps par l'intermédiaire de moyens de rappel élastique et au moins un capteur optique porté par le corps, coopérant avec l'élément de contact pour détecter les déplacements de l'élément de contact dans une direction au moins, sans contact matériel avec ledit élément de contact.

Cette solution suivant l'art antérieur présente des inconvénients. Le capteur optique n'est pas protégé, des salissures pouvant pénétrer entre le corps rigide et l'élément de contact. Chaque capteur est constitué par deux transducteurs photoélectriques (par exemple une diode électroluminescente et un phototransistor) qui résistent mal aux contraintes d'un environnement industriel telles que températures élevées, chocs et vibrations. Ils doivent être répartis en des zones différentes et sont peu accessibles pour réparation ou changement.

L'invention vise à fournir un organe de préhension à capteurs optiques répondant mieux que ceux antérieurement connus aux exigences de la pratique, notamment en ce qu'il est capable de fonctionner en ambiance industrielle sans dégradation, en ce que les organes fragiles ne sont en aucun cas soumis aux efforts à transmettre et en ce qu'il permet, au moins dans certains modes de réalisation, de déterminer l'inclinaison de l'appui.

Dans ce but, l'invention propose notamment un organe de préhension à capteurs optiques caractérisé en ce que le capteur ou chaque capteur coopère avec l'élément de contact à travers un éspace clos défini par le corps et l'élément de contact et comporte des moyens d'amenée de lumière depuis un transducteur éloigné et de retour de lumière vers un transducteur éloigné à fibres optiques se terminant face à une surface réfléchissante de l'élément de contact perpendiculaire à l'axe de façon à déceler les déplacements de cette surface qui provoquent un changement de la proportion de lumière retournée.

Le rôle des moyens à fibre optique est de séparer complètement dans l'espace la fonction de prise d'information de la fonction traitement d'information; les transducteurs assurant cette dernière fonction peuvent être regroupés en grand nombre à distance dans un boîtier commun soustrait aux effets de l'ambiance dans laquelle travaille l'organe de préhension.

Il faut noter que cette fonction des fibres optiques est entièrement différente de celle remplie par exemple dans le document FR-A-2 365 408 qui décrit un palpeur à capteur optique intégré dans le palpeur. Ce palpeur peut comporter une fibre optique, mais son seul rôle est d'amener la lumière d'une partie fixe à une partie mobile et d'autoriser, grâce à sa flexibilité, les déplacements relatifs des deux parties.

Le corps porte avantageusement plusieurs capteurs coopérant avec l'élément de contact pour détecter les déplacements dans plusieurs directions et/ou les inclinaisons. Chaque capteur comporte avantageusement deux fibres optiques formant embout, se terminant face à une surface réfléchissante de façon à déceler, soit les déplacements de cette surface tels que la lumière émise par l'une des fibres soit réfléchie de façon différente vers l'autre, soit les changements d'orientation de la surface produisant le même résultat.

L'invention sera mieux comprise à la lecture de la description qui suit de dispositifs particuliers de mise en œuvre de l'invention, donnés à titre d'exemples non limitatifs. La description se réfère aux dessins qui l'accompagnent, dans lesquels:

— la figure 1 est un schéma montrant la partie terminale de l'organe de préhension suivant un mode particulier de réalisation, en coupe suivant un plan passant par son axe;

— la figure 2 est un schéma montrant un montage possible de l'organe de préhension de la figure 1;

— les figures 3 et 4 sont des schémas de principe montrant, respectivement en coupe verticale et en coupe suivant un plan horizontal, la phase d'approche et de contact lors de l'utilisation de l'organe des figures 1 et 2 pour la préhension de quartiers de viande;

— la figure 5 montre une disposition possible des capteurs dans l'organe de la figure 1, vus dans la direction des flèches V-V de la figure 1;

— la figure 6, similaire à la figure 1, montre une variante de réalisation;

— la figure 7 est un schéma montrant une disposition possible des capteurs et de la plage absorbante du dispositif de la figure 6;

— la figure 8, similaire à la figure 1, montre une autre variante encore;

— la figure 9 est une vue en coupe suivant la ligne IX-IX de la figure 8;

— la figure 10 est un schéma montrant un montage possible de plusieurs organes suivant la figure 8 pour constituer une pince.

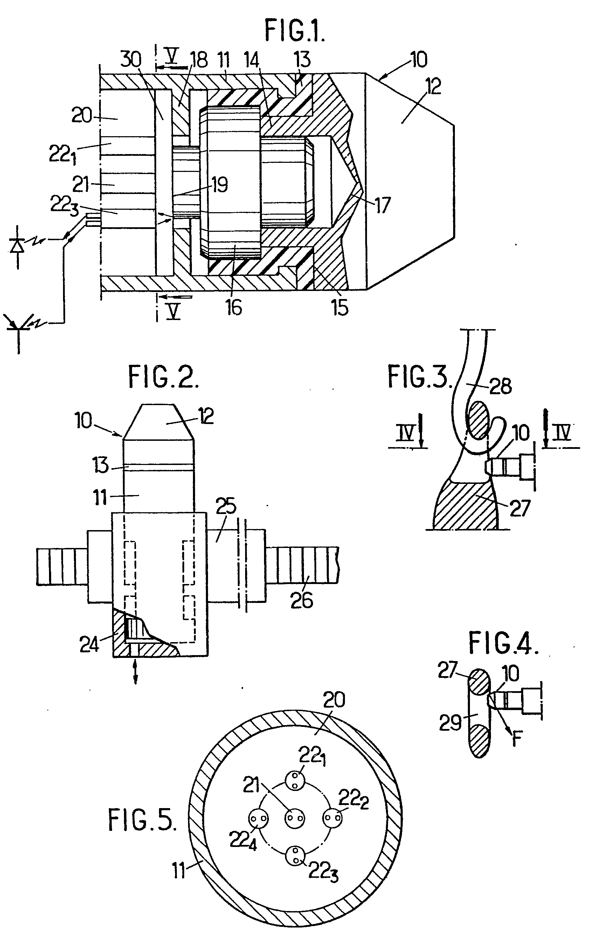

L'organe de préhension qui sera maintenant décrit en faisant référence aux figures 1 à 5 est destiné à saisir, puis à porter, des charges suspendues qui peuvent être très lourdes. L'organe 10 dont une fraction est montrée en figure 1 comporte un corps rigide 11, prévu pour supporter la charge, de forme tubulaire, déplaçable à l'aide d'un appareil de manutention non représenté. La partie terminale du corps 11 porte un élément de contact 12 par l'intermédiaire de moyens élastiques 13 susceptibles de se déformer dans le sens axial et dans le sens transversal lorsqu'une force est appliquée à l'élément 12. Cet élément 12 se présente sous forme d'un embout palpeur dont l'extrémité est tronconique de façon à s'insérer plus facilement dans un passage et à provoquer, en cas d'appui latéral, l'apparition de forces transversales à l'axe de l'organe 10. Les moyens élastiques 13 sont constitués par un manchon de matériau élastomère placé entre la partie terminale du corps 11 et un prolongement 14, de diamètre réduit, de l'embout, prolongement qui s'insère dans la partie terminale. La partie médiane du manchon est emprisonnée entre un épaulement 15 délimitant le prolongement et un pion rapporté 16 fixé – par exemple par collage ou par une liaison filetée – dans un trou borgne central 17 du prolongement 14. Ce pion 16, une fois fixé, devient une partie constitutive de l'élément de contact. Pour éviter des déformations excessives des moyens élastiques, on prévoit avantageusement sur le corps 11 une butée 18 constituée, dans le cas de la figure 1, par une collerette interne sur laquelle le pion 16 vient prendre appui. L'amplitude du déplacement autorisé par la butée 18 sera généralement de l'ordre du millimètre.

Le corps 11 et l'embout 12 portent des éléments coopérants de capteurs optiques de détection des déplacements relatifs du corps et de l'embout. Le nombre et l'emplacement de ces capteurs dépendront de la quantité d'informations que l'on veut recueillir.

Dans le mode de réalisation illustré, les éléments portés par le pion 16 se réduisent à une même surface réfléchissante 19 perpendiculaire à l'axe. Cette solution conduit notamment à un pion de faible coût, puisqu'il ne porte qu'un élément passif. Le pion peut donc à peu de frais être remplacé en même temps que les moyens élastiques en cas de détérioration.

Les éléments des capteurs optiques portés par le corps 11 sont constitués par des couples de fibres optiques dont les faces terminales sont disposées sur la tranche d'un noyau 20 emprisonné dans le corps.

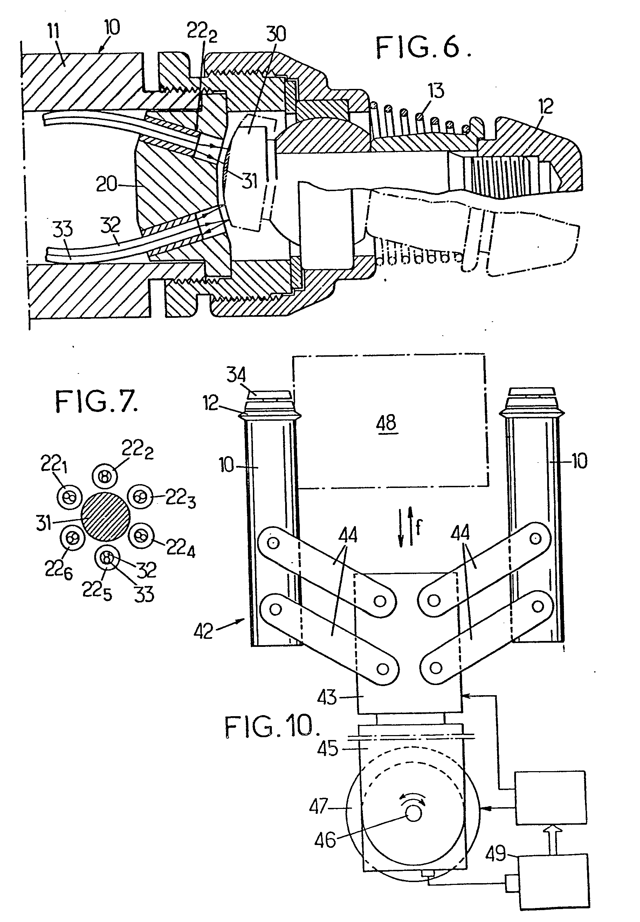

On supposera tout d'abord que les capteurs optiques doivent permettre de déceler les déplacements de l'embout 12 par rapport au corps 11 dans le sens transversal et de donner une indication sur l'orientation de ce déplacement par rapport à l'axe. Ce résultat peut être atteint en prévoyant un capteur central 21 disposé suivant l'axe et au moins trois capteurs latéraux disposés de façon que la réflexion de la lumière sur la face réfléchissante 19 se produise de la même façon pour les trois lorsque l'embout 12 est dans sa position de repos. Dans le mode de réalisation montré en figures 1 et 5, on utilise quatre capteurs latéraux $22_1$ à $22_4$. Cette disposition rend plus facile la détermination des déplacements dans deux directions perpendiculaires, correspondant chacune à l'alignement de trois capteurs.

Chaque capteur, par exemple le capteur $22_3$, est constitué de deux fibres optiques servant l'une à l'amenée de lumière à partir d'un transducteur, l'autre au retour de lumière vers un transducteur éloigné.

L'ensemble des fibres optiques est avantageusement associé à un système unique de détection regroupant tous les transducteurs associés: un tel système, qui utilise un nombre de transducteurs inférieur à celui des capteurs optiques, est décrit et revendiqué dans la demande de brevet EP-A-000 8267.

La venue en contact de l'embout 12 contre un objet lors du déplacement vers l'avant du corps 11 provoque l'apparition d'une force qui sera en général oblique sur l'axe et déplacera transversalement et angulairement l'embout 12. Ce déplacement modifiera la réponse d'au moins un capteur: si, par exemple, il s'effectue de bas en haut sur la figure 1, il se traduira par la suppression de la réflexion de lumière de la fibre d'amenée à la fibre de retour du capteur $22_3$ dès que le bord de la surface réfléchissante se sera déplacé d'une amplitude faible, typiquement de l'ordre de 1/10 mm, mais qui peut être ajustée par un choix approprié du rayon du cercle de répartition des capteurs $22_1 \cdots, 22_4$ par rapport au diamètre de la face réfléchissante 19.

L'organe de préhension montré en figure 1 peut être monté sur un appareil permettant de le déplacer. Par exemple, la figure 2 montre une fraction d'un appareil dans lequel l'organe de préhension 10 est porté par un vérin 24 permettant de l'avancer et de le reculer. Le vérin 24 est à son tour monté sur un chariot 25 déplaçable le long d'une crémaillère 26 dans une direction transversale à l'axe de l'organe de préhension. Enfin, la crémaillère peut être portée par la fourche d'un chariot élévateur non représenté.

A titre d'exemple d'application de l'invention, on décrira maintenant, en faisant référence aux figures 3 et 4, la saisie et la manutention de quartiers de viande suspendus par des crochets à un convoyeur. Chacun des quartiers 27, dont le poids dépassera typiquement la limite de 120 kg imposée par la loi française à la manutention manuelle, est suspendu à un crochet 28. Il doit être saisi par engagement de l'organe de préhension 10 dans l'échancrure 29 du quartier de viande, puis soulevé.

Le cariste amène alors son chariot élévateur face au quartier de viande, soulève la fourche de façon à amener le doigt 11 au niveau de la fente et actionne la crémaillère 26 pour aligner approximativement le doigt 10 avec l'échancrure 29. Il actionne ensuite le vérin 24 pour avancer l'organe 10. Si cet organe se trouve exactement face à l'échancrure, il s'enfonce en totalité sans qu'un signal soit fourni par les capteurs optiques. Le doigt peut également se trouver exactement face au quartier de viande, auquel cas les capteurs fourniront une réponse du même ordre pour tous. Le cariste devra alors reculer l'organe 10, puis le déplacer transversalement ou en hauteur pour un nouvel essai. Le troisième cas qui sera le plus fréquent est celui où l'organe 10 vient en butée oblique contre le quartier de viande, comme indiqué sur la figure 4, ce qui fait apparaître une force oblique F. Le système associé au capteur peut être prévu pour ne donner aucun signal aussi longtemps que cette force F reste inférieure à un seuil, au-dessous duquel l'organe s'insère à force dans l'ouverture. Si le seuil est dépassé, un signal apparaît sur le tableau de bord du chariot. Etant donné que les capteurs donnent une indication sur l'orientation de la force F, ce tableau de bord peut indiquer au cariste dans quel sens il doit déplacer transversalement ou en hauteur l'organe 10 pour permettre son introduction.

Le système d'exploitation des signaux fournis par les capteurs optiques peut être prévu pour fournir des indications quantitatives sur le déplacement. Ce résultat peut notamment être atteint en prévoyant un nombre accru de capteurs, répartis sur plusieurs cercles de rayon différent.

L'organe de préhension peut par ailleurs être porté par des appareils de manutention autres que celui qui vient d'être évoqué, par exemple par une pince de préhension (les capteurs optiques intervenant alors uniquement à faible distance lorsque la caméra portée de façon classique par la pince devient inutilisable). Dans tous les cas, on conserve les avantages essentiels de l'invention, en particulier le fait que les capteurs optiques ne peuvent être pollués puisqu'ils sont placés dans un espace clos 30 (figure 1) et le fait que les capteurs à fibres optiques utilisent un même élément, constitué par la fibre optique, pour réaliser la détection et la transmission du signal et un autre élément, situé à distance, pour effectuer le traitement du signal.

Les figures 6 et 7 montrent un organe de préhension constituant une variante de celui montré en figure 1 et pour plus de simplicité les organes correspondant à ceux de la figure 1 sont désignés par le même numéro de référence. Dans cette variante, l'élément de contact 12 porté par le corps 11 présente une liaison à rotule avec le corps. Ce dernier est encore constitué de plusieurs pièces assemblées, par exemple par filetage. L'élément de contact, également en plusieurs pièces, peut se déplacer en rotation dans un domaine angulaire limité par la venue en butée de sa partie arrière 30 contre la paroi du corps. Des moyens élastiques, constitués par un ressort hélicoïdal 13, tendent à ramener l'élément de contact 12 dans la position de repos où il est illustré en traits pleins sur la figure 6.

La face dirigée vers l'arrière de la partie 30 de l'élément de contact est en forme de calotte sphérique centrée sur la rotule. Cette face arrière est réfléchissante, sauf sur une surface centrale 31 qui absorbe la lumière. Les capteurs optiques $22_1$–$22_6$ sont répartis à intervalles angulaires égaux sur un noyau 20 emprisonné dans le corps. Dans ce mode particulier de réalisation, aucun capteur axial n'est prévu (figure 7). Par contre, il existe six capteurs latéraux au lieu des quatre capteurs de la figure 1. Chaque capteur comprend encore les parties terminales d'une fibre d'amenée de lumière 32 et d'une fibre de retour de lumière 33 associées à des transducteurs éloignés.

L'organe de préhension a un fonctionnement similaire à celui du premier mode de réalisation: tout déplacement en rotation de l'organe de contact autour du centre de la rotule modifie l'emplacement de la surface absorbante par rapport aux capteurs $22_1$–$22_6$. Si par exemple l'élément de contact vient dans la position limite montrée en traits mixtes sur la figure 6, il n'y a plus de lumière réfléchie vers la fibre de retour de lumière du capteur $22_2$.

La disposition montrée en figures 6 et 7 permet de définir douze directions de basculement de l'élément de contact correspondant chacune à la suppression de la réflexion vers un détecteur, ainsi que douze positions intermédiaires correspondant à la suppression de la réflexion vers deux capteurs adjacents.

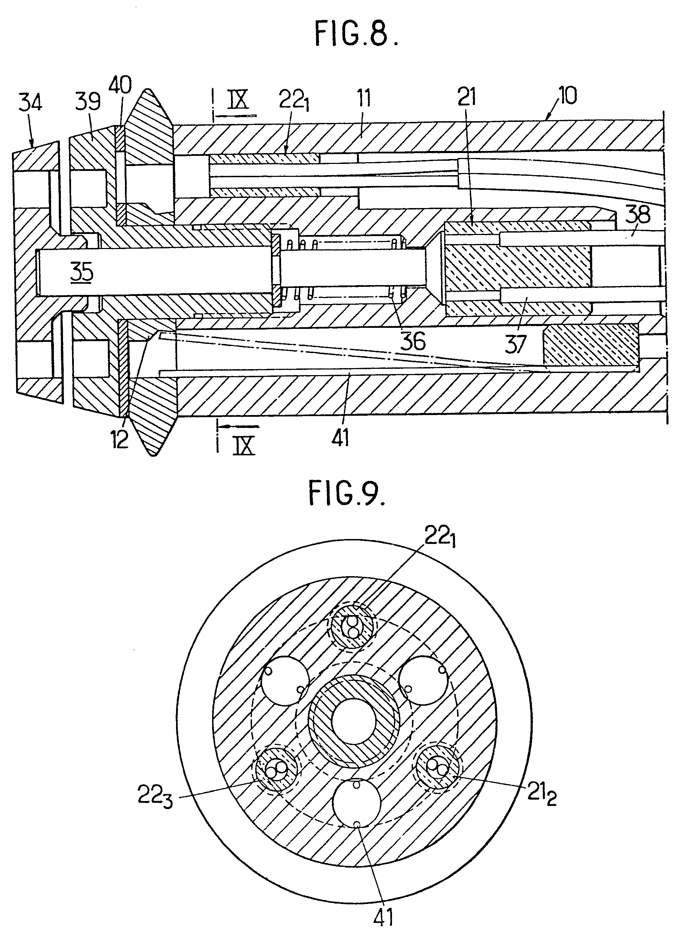

Le mode de réalisation montré en figures 8 et 9, qui est particulièrement avantageux lorsque l'on doit grouper plusieurs organes de préhension dans un même appareil de manipulation pour constituer une pince comporte des capteurs différents pour détecter les venues en butée dans le sens axial et les venues en appui dans le sens latéral. Les figures 8 et 9, où les organes correspondant à ceux de la figure 1 portent encore le même numéro de référence, montrent encore un corps 10 en plusieurs pièces assemblées, par exemple par des filetages. Un premier élément de contact 34, destiné à détecter les venues en butée axiale, comprend un embout terminal 34 de forme circulaire, porté par une tige 35 capable de coulisser dans le corps 10. Un ressort hélicoïdal de compression 36 tend à amener l'élément de contact dans la position en saillie où il est montré en figure 8. Lorsqu'une force axiale suffisante pour vaincre la force de rappel exercée par le ressort 36 est appliquée à l'élément de contact 34, cet élément se rétracte dans une position où l'extrémité arrière de la tige 35 interrompt le trajet de lumière depuis une fibre d'amenée de lumière 37 vers une fibre de retour de lumière 38 d'un capteur axial 21.

L'élément de contact latéral est constitué par un disque annulaire 12 dont une des faces planes est retenue en contact contre la face terminale du corps 11 par le rebord radial d'une douille filetée 39 vissée dans le corps. Une rondelle de calibrage 40 peut être insérée entre le rebord et le disque 12. Des moyens élastiques, constitués par trois tronçons de fil d'acier 41, dit corde à piano, repoussent le disque vers la position de repos où il est représenté en figure 8 et où il est centré par rapport au corps. Les déplacements du disque dans le sens radial sont détectés par trois capteurs $22_1$, $22_2$ et $22_3$ similaires aux capteurs des premiers modes de réalisation.

Le fonctionnement de cet organe étant similaire à celui des précédentes ne sera pas décrit ici.

Comme indiqué plus haut, on peut grouper plusieurs organes de préhension pour constituer un manipulateur. La figure 10 montre, à titre d'exemple, une pince de manipulateur 42 comportant un poignet 43 sur lequel sont placés plusieurs organes de préhension (dans le cas illustré). Chaque organe de préhension est monté sur le poignet par un parallélogramme déformable constitué de deux biellettes 44. Un moteur (non représenté) permet de rapprocher ou d'écarter les organes de l'axe du poignet. Ce poignet 43 est porté par un bras 45 qui peut tourner autour d'une articulation de coude 46 sous l'action d'un moteur 47. L'ensemble comportant la pince, le poignet et le bras peut être déplacé par des moyens moteurs (non représentés) dans les directions indiquées par les flèches f.

Le fonctionnement de l'appareil pour saisir une charge 48, ayant par exemple la forme indiquée en traits mixtes sur la figure 10, est la suivante.

On déplace tout d'abord l'appareil vers la charge; ce mouvement s'effectue de façon que les organes de préhension encadrent la charge 48.

Le moteur de commande des parallélogrammes déformables 44 est ensuite alimenté pour refermer progressivement les organes de préhension. Généralement, la charge ne sera pas exactement centrée dans la pince. Dans ce cas, l'élément de contact 12 de l'un des organes 10 viendra le premier en contact avec la charge. Cet élément de contact se déplacera de la position de repos et un signal sera fourni par l'un des capteurs. Tous les capteurs optiques de l'appareil peuvent être reliés à une unité de traitement commune 49 incorporant une matrice de transducteurs du genre décrit dans la demande de brevet EP-A-000 8267. Cette matrice de transducteurs peut coopérer non seulement avec les capteurs portés par chacun des organes de préhension 10, mais aussi avec des capteurs supplémentaires associés au poignet, à l'articulation de coude, à des systèmes de butée de fin de course, etc. La détection du contact par l'un des organes de préhension provoque la commande du moteur 47 dans une direction correspondant à l'écartement de l'organe de contact et jusqu'à perte du contact. Les parallélogrammes déformables peuvent de nouveau être commandés dans le sens de la fermeture et la séquence de fonctionnement est reprise jusqu'à ce que tous les organes de contact soient appliqués sur la charge. Une commande supplémentaire peut alors intervenir pour serrer la pince sur la charge.

Si, au cours du premier mouvement d'approche, l'un des organes de préhension 10 vient en butée axiale contre la charge, le capteur correspondant 21 fournira un signal qui sera traité pour arrêter le mouvement vers l'avant et provoquer un déplacement transversal de la pince.

Comme indiqué plus haut, on peut placer un nombre quelconque d'organes de préhension, typiquement trois ou quatre, sur la même pince. Chaque organe peut être associé à un moteur séparé. Enfin, les organes de préhension suivant l'invention peuvent être incorporés à des systèmes de robot de genres très différents, associés à un système de commande quelconque et qu'il n'est pas nécessaire de décrire ici car il n'est pas directement concerné par l'invention.

## Revendications

1. Organe de préhension à capteurs optiques, comprenant un corps rigide (11), un élément de contact (12) porté par le corps, soumis à l'action de moyens de rappel élastique (13) et au moins un capteur optique 21, $22_1$ à $22_6$ porté par le corps, coopérant avec l'élément de contact pour détecter les déplacements de l'élément de contact dans une direction au moins, sans contact matériel avec ledit élément de contact, caractérisé en ce que le capteur ou chaque capteur coopère avec l'élément de contact à travers un espace clos (30) défini par le corps (11) et l'élément de contact et comporte des moyens d'amenée de lumière depuis un transducteur éloigné et de retour de lumière vers un transducteur éloigné à fibre optique se terminant face à une surface réfléchissante (19) de l'élément de contact perpendiculaire à l'axe de façon à déceler les déplacements ou les changements d'orientation de cette surface (19) qui provoquent un changement de la proportion de lumière retournée à travers ledit espace.

2. Organe suivant la revendication 1, caractérisé en ce que le corps porte plusieurs capteurs $22_1$ à $22_6$ coopérant avec l'élément de contact pour détecter les déplacements dans plusieurs directions et/ou les inclinaisons de l'élément.

3. Organe suivant la revendication 2, caractérisé en ce qu'il comporte au moins trois capteurs répartis régulièrement autour de l'axe de l'organe et en ce que la surface réfléchissante (19) est de forme circulaire et a un diamètre sensiblement égal à celui du cercle sur lequel sont répartis les capteurs.

4. Organe suivant la revendication 3, caractérisé en ce qu'il comporte un capteur supplémentaire (21) situé dans l'axe.

5. Organe suivant l'une quelconque des revendications précédentes, caractérisé en ce que la surface réfléchissante (19) est ménagée sur un pion amovible (16) porté par un embout et constituant, avec lui, l'élément de contact (12).

6. Organe de préhension suivant l'une quelconque des revendications 1 à 4, caractérisé en ce que l'élément de contact (12) est monté sur le corps (11) de façon à pouvoir coulisser sur lui transversalement à l'axe longitudinal du corps, lesdits moyens élastiques tendant à maintenir ledit élément de contact dans une position coaxiale au corps.

7. Organe de préhension suivant la revendication 6, caractérisé en ce que ledit élément de contact présente une forme de disque annulaire en saillie radiale par rapport au corps dans toutes les directions lorsqu'il est en position de repos.

8. Organe de préhension suivant la revendication 6 ou 7, caractérisé en ce qu'il comporte un élément de contact additionnel monté sur le corps de façon à pouvoir coulisser le long de l'age longitudinal du corps et associé à des moyens qui tendent à le repousser vers une position de repos en saillie, ainsi qu'un capteur optique additionnel comprenant une paire de fibres optiques pour détecter les déplacements de l'élément de contact additionnel à partir de sa position de repos.

9. Manipulateur comportant plusieurs organes de préhension suivant l'une quelconque des revendications précédentes montés sur des moyens permettant de les déplacer en bloc et de donner auxdits organes un mouvement de rapprochement ou d'éloignement, l'ensemble des transducteurs coopérant avec les capteurs par l'intermédiaire des moyens d'amenée et de retour de lumière à fibre optique étant regroupés dans un même boîtier commun éloigné.

10. Manipulateur suivant la revendication 9, caractérisé en ce que les capteurs sont associés avec les transducteurs éloignés suivant une disposition matricielle.

**Patentansprüche**

1. Greiforgan mit optischen Sensoren, einem starren Körper (11), einem von dem Körper getragenen Kontaktelement (12), das der Wirkung eines elastischen Rückstellmittels (13) ausgesetzt ist, und mindestens einem von dem Körper getragenen optischen Empfänger (21, $22_1$–$22_6$), der mit dem Kontaktelement zusammenwirkt, um die Verschiebungen des Kontaktelements in mindestens einer Richtung festzustellen, und zwar ohne materiellen Kontakt mit dem erwähnten Kontaktelement, dadurch gekennzeichnet, dass der oder jeder Empfänger mit dem Kontaktelement über einen geschlossenen Raum (30) zusammenwirkt, der durch den Körper (11) und das Kontaktelement begrenzt ist, und Mittel zum Zuleiten von Licht von einem entfernt angeordneten Umformer und zum Zurückleiten von Licht zu einem entfernt angeordneten Umformer aus optischen Fasern aufweist, die gegenüber einer reflektierenden, zur Achse senkrechten Oberfläche (19) des Kontaktelements enden, so dass die Verschiebungen oder Änderungen der Richtung dieser Oberfläche (19) feststellbar sind, die eine Änderung des Anteils des durch den erwähnten Raum zurückgeleiteten Lichtes bewirken.

2. Organ nach Anspruch 1, dadurch gekennzeichnet, dass der Körper mehrere Empfänger ($22_1$–$22_6$) aufweist, die mit dem Kontaktelement zusammenwirken, um die Verschiebungen des Elements in mehreren Richtungen und/oder die Neigungen des Elements festzustellen.

3. Organ nach Anspruch 2, dadurch gekennzeichnet, dass es mindestens drei um die Achse des Organs herum gleichmässig verteilt angeordnete Empfänger aufweist und dass die reflektierende Oberfläche (19) kreisförmig ist und einen Durchmesser aufweist, der etwa gleich dem des Kreises ist, auf dem die Empfänger verteilt angeordnet sind.

4. Organ nach Anspruch 3, dadurch gekennzeichnet, dass es einen in der Achse angeordneten Hilfsempfänger (21) aufweist.

5. Organ nach einem der vorgehenden Ansprüche, dadurch gekennzeichnet, dass die reflektierende Oberfläche (19) auf einem unbeweglichen Zapfen (16) vorgesehen ist, der von einem Stekker getragen wird und zusammen mit diesem das Kontaktelement (12) bildet.

6. Greiforgan nach einem der Ansprüche 1 bis 4, dadurch gekennzeichnet, dass das Kontaktelement (12) derart auf dem Körper (11) gelagert ist, dass es auf diesem transversal zur Längsachse des Körpers verschiebbar ist, wobei die erwähnten elastischen Mittel bestrebt sind, das erwähnte Kontaktelement in einer zum Körper koaxialen Lage zu halten.

7. Greiforgan nach Anspruch 6, dadurch gekennzeichnet, dass das Kontaktelement die Form einer ringförmigen Scheibe aufweist, die relativ zum Körper in allen Radialrichtungen vorsteht, wenn sie ihre Ruhelage einnimmt.

8. Greiforgan nach Anspruch 6 oder 7, dadurch gekennzeichnet, dass es ein zusätzliches Kontaktelement, das derart auf dem Körper gelagert ist, dass es in Richtung der Längsachse des Körpers verschiebbar ist, und das mit Mitteln verbunden ist, die bestrebt sind, es in eine vorstehende Ruhelage zurückzustellen, sowie einen zusätzlichen optischen Empfänger aufweist, der zwei optische Fasern zum Feststellen der Verschiebungen des zusätzlichen Kontaktelements aus seiner Ruhelage aufweist.

9. Manipulator mit mehreren Greiforganen nach einem der vorhergehenden Ansprüche, wobei die Greiforgane auf Mitteln gelagert sind, die es gestatten, die Greiforgane gemeinsam zu verschieben und ihnen eine Annäherungs- oder Wegbewegung zu erteilen, wobei eine Anordnung von Umformern, die mit den Empfängern über Lichtzuleistungs- und Lichtrückleitungsmittel aus optischen Fasern zusammenwirken, in dem gleichen entfernt angeordneten Gehäuse untergebracht sind.

10. Manipulator nach Anspruch 9, dadurch gekennzeichnet, dass die Empfänger mit den entfernt angeordneten Umformern in einer Matrixanordnung verbunden sind.

**Claims**

1. Prehension unit having optical sensors, comprising a rigid body (11), a contact element (12) carried by the body, subjected to the action of resilient return means (13) and at least one optical sensor (21, $22_1$ to $22_6$) carried by the body, cooperating with the contact element for detecting the displacements of the contact element in one direction at least, without any material contact with said contact element, characterized in that the sensor or each sensor cooperates with the contact element through a closed space (30) defined by the body (11) and the contact element and includes means for carrying light from a remote transducer and for returning light to a remote transducer having an optical fiber which terminates in front of a reflecting surface (19) of the contact element which is perpendicular to the axis whereby the displacements or angular position changes of that surface (19) which result in a change in the proportion of light which is returned through said space can be detected.

2. Unit according to claim 1, characterized in that the body carries a plurality of sensors ($22_1$ to $22_6$) cooperating with a contact element for detecting movements along a plurality of directions and/or tilting of said element.

3. Unit according to claim 2, characterized in that it comprises at least three sensors which are evenly distributed about the axis of the unit and in that the reflecting surface (19) has a circular shape and has a diameter substantially equal to that of the circle on which the sensors are distributed.

4. Unit according to claim 3, characterized in that it comprises an additional sensor (21) located along the axis.

5. Unit according to any one of the preceding claims, characterized in that the reflecting surface (19) is formed on a removable insert (16) carried by a feeler and cooperating therewith to form the contact element (12).

6. Prehension unit according to any one of claims 1 to 4, characterized in that the contact element (12) is so connected to the body (11) as to be able to slide thereon transversely to the longitudinal axis of the body, said resilient means biasing said contact element to a position coaxial to the body.

7. Prehension unit according to claim 6, characterized in that said contact element is shaped as an annular disk radially projecting from the body in all directions when in rest condition.

8. Prehension unit according to claim 6 or 7, characterized in that it comprises an additional contact element mounted on the body for slidable movement along the longitudinal axis of the body and associated with means which bias it to a projecting rest condition and a supplemental optical sensor having a pair of optical fibers for detecting movements of the supplemental contact element from its rest position.

9. Manipulator comprising a plurality of prehension units according to any one of the preceding claims, carried by means for displacing them as a whole and to move said units toward or away from each other, all transducers which cooperate with the sensors through optical fiber light carrying and returning means being located in a same common remote housing.

10. Manipulator according to claim 9, characterized in that the sensors are associated with the remote transducers according to a matrix arrangement.

FIG.1.

FIG.2.

FIG.3.

FIG.4.

FIG.5.

FIG.6.

FIG.7.

FIG.10.

FIG.8.

FIG.9.